## Europäisches Patentamt
## European Patent Office
## Office européen des brevets

(19)

(11) Veröffentlichungsnummer: **0 265 841**
**B1**

(12)

# EUROPÄISCHE PATENTSCHRIFT

(45) Veröffentlichungstag der Patentschrift:
**19.12.90**

(51) Int. Cl.⁵: **C08F 14/06**, C08F 2/20

(21) Anmeldenummer: **87115484.5**

(22) Anmeldetag: **22.10.87**

(54) Verfahren zur Herstellung von Vinylchlorid-Polymerisaten.

(30) Priorität: **29.10.86 DE 3636756**

(43) Veröffentlichungstag der Anmeldung:
**04.05.88 Patentblatt 88/18**

(45) Bekanntmachung des Hinweises auf die Patenterteilung:
**19.12.90 Patentblatt 90/51**

(84) Benannte Vertragsstaaten:
**BE DE FR GB IT NL**

(56) Entgegenhaltungen:
EP-A- 0 000 430
DD-A- 134 314
DE-A- 2 518 260

(73) Patentinhaber: **BASF Aktiengesellschaft,
Carl-Bosch-Strasse 38, D-6700 Ludwigshafen(DE)**

(72) Erfinder: **Deuschel, Walter, Dr., Dirmsteiner Weg 63,
D-6700 Ludwigshafen(DE)**

## Beschreibung

Die Erfindung betrifft ein verbessertes Verfahren zur Herstellung von Vinylchlorid-Polymerisaten durch Polymerisation von Vinylchlorid oder einer Mischung aus Vinylchlorid mit einem oder mehreren anderen Monomeren, die mit Vinylchlorid copolymerisierbar sind, unter Rühren in wäßriger Suspension durch radikalische Polymerisation in Gegenwart von Schutzkolloiden.

Dieses Verfahren ist, sieht man von der erfindungsgemäßen Verbesserung ab, allgemein bekannt. So wird in der DE-AS 22 52 340 ein Vinylchlorid-Polymerisat unter Zusatz bestimmter Natrium- und Kaliumsalze hergestellt. Mit diesem Verfahren lassen sich zwar Vinylchlorid-Polymerisate mit einer Schüttdichte von über 0,6 g/cm³ mit ausreichender Extrudierbarkeit herstellen, jedoch genügt die Porosität des so erhaltenen Polymerisates nicht den verarbeitungstechnischen Ansprüchen. Zum großen Teil enthalten die Polymerisate agglomerierte, nicht kugelförmige oder in Mikroskopaufnahmen der wasserfeuchten Produkte glasartig erscheinende, unporöse Teilchen. Solche Polymersate lassen sich unter anderem nicht schnell genug vom monomeren Vinylchlorid befreien und nehmen die zur Verarbeitung zugesetzten flüssigen Hilfsstoffe nicht schnell und gleichmäßig genug auf.

Es bestand daher die Aufgabe, ein Verfahren bereitzustellen, das Vinylchlorid-Polymerisate unter Vermeidung der genannten Nachteile mit hoher Schüttdichte und hoher und gleichmäßiger Porosität bei enger Korngrößenverteilung und guter Verarbeitbarkeit liefert.

Demgemäß wurde ein Verfahren zur Herstellung von Vinylchlorid-Polymerisaten durch Polymerisation von Vinylchlorid oder einer Mischung aus Vinylchlorid mit einem oder mehreren anderen Monomeren, die mit Vinylchlorid copolymerisierbar sind, unter Rühren in wäßriger Suspension durch radikalische Polymerisation in Gegenwart von Schutzkolloiden gefunden, das dadurch gekennzeichnet ist, daß man die Polymerisation in Gegenwart von

a) 0,01 bis 1,0 Gew.%, bezogen auf eingesetztes Monomeres, eines Wasser schwerlöslichen Erdalkali-, Aluminium-, Zink- oder Bleisalzes einer ein- oder mehrbasischen Carbonsäure und

b) 10 bis 1000 Gew.-ppm, bezogen auf eingesetztes Monomeres, eines in aromatischen Diols, das zur Ausbildung eines chinoiden Systems befähigt ist

durchführt.

Außerdem wurden spezielle Ausgestaltungen des Verfahrens gemäß den Unteransprüchen gefunden.

Unter den erfindungsgemäß eingesetzten in Wasser schwerlöslichen Salzen werden die des Calciums, Magnesiums oder Zinks bevorzugt. Als ein- oder zweibasische Carbonsäuren, die gegebenenfalls durch Hydroxylgruppen substituiert sein können, kommen dabei in Betracht
- gesättigte oder ungesättigte aliphatische oder cycloaliphatische $C_6$- bis $C_{32}$-Carbonsäuren, z.B. Fettsäuren, Abietinsäure, Naphthensäuren oder Ricinolsäure,
- aromatische, gegebenenfalls durch $C_1$- bis $C_{20}$-Alkylreste substituierte Carbonsäuren, z.B. p-Octylbenzoesäure oder
- araliphatische $C_7$- bis $C_{32}$-Carbonsäuren, z.B. γ-Phenylvaleriansäure.

Auf die sonstigen Eigenschaften der Säuren kommt es nach den bisherigen Beobachtungen nicht an. Bevorzugt sind Fettsäuren, insbesondere die Laurin-, Myristin-, Stearin- oder Ölsäure.

Die Salze dieser Säuren sind bei dem erfindungsgemäßen Verfahren in Mengen von 0,01 bis 1,0 Gew.%, vorzugsweise 0,05 bis 0,3 Gew.%, bezogen auf die Menge des eingesetzten Monomeren, zugegen.

Nach den bisherigen Beobachtungen sind die zur Ausbildung eines chinoiden Systems fähigen aromatischen Diole umso wirksamer, je hydrophiler sie sind, weshalb sich aus wirtschaftlichen Gründen besonders die Stammverbindungen Hydrochinon oder Brenzkatechin empfehlen. Daneben sind auch diejenigen Derivate, von denen zumindest ein Teil in der wäßrigen Phase verbleibt, geeignet. Dazu gehören die kernsubstituierten Derivate des Hydrochinons und des Brenzkatechins, wobei als Substituenten

- $C_1$-$C_4$-Alkyl,
- Aryl,
- -F, -Cl, -CN,
- -O-$C_1$-$C_4$-Alkyl und insbesondere -OH,
- -CO-$C_1$-$C_4$-Alkyl, insbesondere -COCH$_3$,
- -COO$C_1$-$C_4$-Alkyl,
- $C_4$-$C_8$-Alkylenreste, die gegebenenfalls annellierte Ringe vervollständigen können bzw. mit den angegebenen Substituenten substituiert sein können,
in Frage kommen.

Diese Verbindungen werden in Mengen von 10 bis 1000, bevorzugt 10 bis 500, besonders bevorzugt 50 bis 200 Gew.-ppm, bezogen auf die Menge des eingesetzten Monomeren, verwendet.

Die Art der Zugabe der Stoffe a) ist wie bei den Stoffen b) unkritisch. a) und b) können getrennt oder gemeinsam, in fester, gelöster oder suspendierter Form dem Reaktionsansatz zugegeben werden.

Die Suspensionspolymerisation des Vinylchlorids und gegebenenfalls der weiteren Monomeren kann wie üblich vorgenommen werden, also etwa mit 0,8 bis 2 kg Wasser pro kg der Monomeren bei 20 bis 80°C und erhöhtem Druck, der z.B. dem Eigendampfdruck der Reaktionsmischung entsprechen kann, unter Rühren in Reaktoren, die für technische Zwecke ein Volumen von mindestens 100 l haben sollten. Der Reaktor ist im allgemeinen zu 60 bis 95, bevorzugt 80 bis 95 % seines Volumens mit der Reaktionsmischung gefüllt. Üblicherweise wird ein Reaktor verwendet, der mit einem Blattrührer, Walzenrührer oder bevorzugt dreiflügeligen Impellerrührer ausgerüstet ist, wobei gegebenenfalls mehrere Rührorgane übereinander auf einer Rührwelle angeordnet sein können. Der Rührerdurchmesser beträgt im allgemeinen 30 bis 90 % des Kesseldurchmessers. Es empfiehlt sich, bei der Polymerisation nur mäßig zu rühren, um einer unerwünschten Agglomeratbildung der suspendierten Teilchen entgegenzuwirken. Die Rührerdrehzahl sollte daher so eingestellt werden, daß die Geschwindigkeit der äußeren Rührerblattenden nicht mehr als 7 m/s beträgt. Andererseits ist es sinnvoll, die Blattendgeschwindigkeit nicht unter 1 m/s zu halten, um eine ausreichende Durchmischung zu gewährleisten. Für einen gegebenen Reaktor mit Rührer kann der Fachmann in bekannter Weise in einigen Vorversuchen unschwer die für die Eigenschaften des Polymerisates optimalen Werte der Blattendgeschwindigkeit und der Schutzkolloidmenge festlegen, wie es von H. Bieringer et al in "Die angewandte makromolekulare Chemie" 123 (1984), Seite 307-334 oder von H. Lewis et al in "Journal of Vinyl Technology" 3 (1981), Seiten 102-106 beschrieben wird.

Die Art der verwendeten Schutzkolloide ist unkritisch. Beispielsweise können wasserlösliche Polymere wie Cellulosederivate, wie Methylcellulose, Carboxymethylcellulose und insbesondere Methylhydroxypropylcellulose sowie ganz oder teilweise verseifte Polyvinylacetate sowie Gemische dieser Schutzkolloide eingesetzt werden und zwar in Mengen von 0,01 bis 1 Gew.%, bezogen auf die Menge der eingesetzten Monomeren.

Das erfindungsgemäße Verfahren ist sowohl für die Suspensionspolymerisation von Vinylchlorid allein als auch für dessen Copolymerisation mit weiteren Monomeren geeignet, wobei deren Anteil bis zu etwa 50 Gew.% des Monomerengemisches betragen kann. Spezielle Beispiele für geeignete Co- monomere sind Ethylen, Propylen, Vinylacetat, Vinylpropionat, Laurylvinylether, Isobutylvinylether, Methacrylat, Methylmethacrylat, Ethylacrylat, Propylacrylat, Butylacrylat und Octylacrylat sowie Gemische dieser und weiterer Monomeren.

Als Initiatoren eignen sich öllösliche Radikalbildner wie Dilauroylperoxid, tert.-Butylperoxipivalat, Dialkylperoxidicarbonate, Azo-bis-isobutyronitril bzw. deren Gemische, in wirksamer Menge (etwa 0,005 bis 1 Gew.%, bezogen auf die Menge der Monomeren).

Außerdem können noch weitere Hilfsmittel und Zusatzstoffe zugegen sein, beispielsweise Puffersubstanzen wie Natriumbicarbonat, Molekulargewichtsregler wie Trichlorethylen, Vernetzungsmittel wie Diallylterephthalat, Stabilisatoren gegen thermische Schädigung des Polymerisates, wie 2,6-Ditert.-butylparakresol, Füllstoffe wie Kreide und wasserunlösliche suspendierte Polymerisate wie Polymerisate oder Copolymerisate von Styrol oder Acrylaten, die zur Verbesserung der mechanischen Eigenschaften des Vinylchlorid-Polymerisates dienen.

Mit dem erfindungsgemäßen Verfahren lassen sich Vinylchlorid-Polymerisate mit hoher Schüttdichte bei hoher Porosität, enger Korngrößenverteilung und mit guter Verarbeitbarkeit herstellen, was den Gebrauchswert des Polymerisates erheblich erhöht. Die Polymerisatteilchen sind einheitlich rund, frei von agglomerierten Teilchen und gleichmäßig porös, d.h. glasartig erscheinende, unporöse Teilchen fehlen fast vollständig. Die Polymerisate lassen sich schnell und vollständig von unumgesetztem Monomeren befreien und in rationeller Weise mit großer Geschwindigkeit, z.B. durch Extrusion, zu Formteilen weiterverarbeiten. Die mit dem erfindungsgemäßen Verfahren hergestellten Polymerisate können zur Herstellung von Formteilen, z.B. durch Spritzguß oder Kalandrieren, insbesondere durch Extrudieren, verwendet werden.

Die Schüttdichten der Vinylchloridpolymerisate wurden nach DIN 53468, die Porosität in Form der Weichmacheraufnahme nach DIN 53417 und die Korngrößenverteilungen durch Siebanalyse nach DIN 53734 bestimmt.

Beispiel 1

In einem Reaktor, ausgerüstet mit einem Rührer, dessen Durchmesser 70 % des Kesseldurchmessers beträgt, wurden 98 Gew.-Teile Wasser, 55 Gew.-Teile Vinylchlorid, 0,0825 Gew.-Teile einer Methylhydroxypropylcellulose, im folgenden mit MHPC bezeichnet, mit einem Methoxylgehalt von 28 und einem Hydroxypropylgehalt von 5,0 Gew.%, jeweils bezogen auf die Methylhydroxy propylcellulose, und einer Viskosität von 50 mPas, gemessen in 2 gew.%iger wäßriger Lösung bei 20°C, 0,11 Gew.-Teile Calciumstearat, 0,055 Gew.-Teile Natriumtripolyphosphat, 0,0385 Gew.-Teile t-Butylperoxineodecanoat und 0,0055 Gew.-Teile Hydrochinon eingefüllt, so daß der Reaktor zu 90 Vol.% gefüllt war. Nach Verdrängen des Luftsauerstoffs durch Stickstoff wurde unter Rühren mit einer Blattendgeschwindigkeit von 1,75 m/s bei 55°C polymerisiert, bis der Druck im Reaktor zu fallen begann.

Das restliche Monomere wurde abgetrennt und das Polymerisat durch Filtrieren und Trocknen aufgearbeitet.

Das Polymerisat besteht praktisch vollständig aus kugelförmigen, nicht glasartig erscheinenden Polymerisatteilchen mit einem Durchmesser von mehr als 20 µm und ist frei von agglomerierten Teilchen.

Vergleichsbeispiel 1*

Es wurde wie in Beispiel 1* gearbeitet, mit dem Unterschied, daß kein Calciumstearat und 0,11 Gew.-Teile MHPC eingesetzt und mit einer Blattendgeschwindigkeit von 2,6 m/s polymerisiert wurde.
Das Polymerisat besteht zum großen Teil aus glasartig erscheinenden Teilchen.

Vergleichsbeispiel 2*

Es wurde wie in Vergleichsbeispiel 1* gearbeitet, mit dem Unterschied, daß 0,0825 Gew.-Teile MHPC eingesetzt wurden und mit einer Blattendgeschwindigkeit von 4,0 m/s polymerisiert wurde.
Das Polymerisat besteht zum großen Teil aus glasartig erscheinenden Teilchen.

Vergleichsbeispiel 3*

Es wurde wie in Beispiel 1 gearbeitet, mit dem Unterschied, daß kein Hydrochinon und 0,055 Gew.-Teile MHPC verwendet wurden und mit einer Blattendgeschwindigkeit von 2,0 m/s polymerisiert wurde.
Das Polymerisat ist mit zahlreichen feinen Teilchen mit einem Durchmesser von etwa 20 µm und weniger durchsetzt, was sich auf die Verarbeitbarkeit, insbesondere auf dem Extruder, nachteilig auswirkt.

Beispiel 2

Es wurde wie in Beispiel 1 gearbeitet, mit dem Unterschied, daß statt 0,11 Gew.-Teilen Calciumstearat 0,055 Gew.-Teile Zinkstearat verwendet wurden.

Beispiel 3

Es wurde wie in Beispiel 1 gearbeitet, jedoch wurde statt Natriumtripolyphosphat Natriumcarbonat verwendet.
Die Eigenschaften der Polymerisate sind in der folgenden Tabelle zusammengefaßt.

Tabelle

| Beispiel | Vergleichs-beispiel | Korngrößenverteilung | | Schütt-dichte [g/cm$^3$] | Porosität |
|---|---|---|---|---|---|
| | | Kornrückstand [Gew.-%] bei | | | |
| | | 200 µm | 160 µm | | |
| 1 | | 9 | 54 | 0,68 | gleichmäßig |
| | 1* | 20 | 49 | 0,66 | ungleichmäßig |
| | 2* | | 0,3 | | ungleichmäßig |
| | 3* | 21 | 67 | 0,62 | ungleichmäßig |
| 2 | | 8 | 47 | 0,66 | gleichmäßig |
| 3 | | 13 | 59 | 0,66 | gleichmäßig |

**Patentansprüche**

1. Verfahren zur Herstellung von Vinylchlorid-Polymerisaten durch Polymerisation von Vinylchlorid oder einer Mischung aus Vinylchlorid mit einem oder mehreren anderen Monomeren, die mit Vinylchlorid copolymerisierbar sind, unter Rühren in wäßriger Suspension durch radikalische Polymerisation in Gegenwart von Schutzkolloiden, dadurch gekennzeichnet, daß man die Polymerisation in Gegenwart von
a) 0,01 bis 1,0 Gew.%, bezogen auf die Menge des eingesetzten Monomeren, eines Erdalkali-, Aluminium-, Zink- oder Bleisalzes einer ein- oder mehrbasischen Carbonsäure und
b) 10 bis 1000 Gew.-ppm, bezogen auf die Menge des eingesetzten Monomeren, eines aromatischen Diols, welches zur Ausbildung eines chinoiden Systems befähigt ist,
durchführt.

2. Verfahren nach Anspruch 1, dadurch gekennzeichnet, daß man einen Rührer verwendet, dessen Durchmesser 30 bis 90 % des Kesseldurchmessers beträgt und dessen Blattendgeschwindigkeit 1 bis 7 m/s beträgt.

3. Verfahren nach den Ansprüchen 1 und 2, dadurch gekennzeichnet, daß man das Metallcarbonsäuresalz in Mengen von 0,05 bis 0,3 Gew.%, bezogen auf die Menge des eingesetzten Monomeren, verwendet.

4. Verfahren nach den Ansprüchen 1 bis 3, dadurch gekennzeichnet, daß man das aromatische Diol in Mengen von 50 bis 200 Gew.-ppm, bezogen auf eingesetztes Monomeres, verwendet.

5. Verfahren nach den Ansprüchen 1 bis 4, dadurch gekennzeichnet, daß man als Metallcarbonsäuresalz Calcium-, Magnesium- oder Zinklaurat, -myristat, -oleat oder -stearat verwendet.

6. Verfahren nach den Ansprüchen 1 bis 5, dadurch gekennzeichnet, daß man als aromatisches Diol Hydrochinon oder Brenzkatechin verwendet.

## Claims

1. A process fo the preparation of a vinyl chloride polymer by polymerization of vinyl chloride or of a mixture of vinyl chloride with one or more other monomers which are copolymerizable with vinyl chloride, while stirring in aqueous suspension, by free radical polymerization in the presence of a protective colloid, wherein the polymerization is carried out in the presence of a) from 0.01 to 1.0% by weight, based on the amount of the monomer used, of an alkaline earth metal salt, aluminium salt, zinc salt or lead salt of a monobasic or polybasic carboxylic acid and b) from 10 to 1 000 ppm by weight, based on the amount of the monomer used, of an aromatic diol which is capable of forming a quinoid system.

2. A process as claimed in claim 1, wherein a stirrer is used whose diameter is from 30 to 90% of the kettle diameter and the speed of whose paddle ends is from 1 to 7 m/s.

3. A process as claimed in claims 1 and 2, wherein the metal salt of the carboxylic acid is used in an amount of from 0.05 to 0.3% by weight, based on the amount of the monomer used.

4. A process as claimed in claim 1 or 2 or 3, wherein the aromatic diol is used in an amount of from 50 to 200 ppm by weight, based on the monomer used.

5. A process as claimed in claim 1 or 2 or 3 or 4, wherein calcium, magnesium or zinc laurate, myristate, oleate or stearate is used as the metal salt of the carboxylic acid.

6. A process as claimed in claim 1 or 2 or 3 or 4 or 5, wherein the aromatic diol used is hydroquinone or pyrocatechol.

## Revendications

1. Procédé de préparation de polymères de chlorure de vinyle par polymérisation de chlorure de vinyle ou d'un mélange de chlorure de vinyle avec un ou plusieurs autres monomères qui sont copolymérisables avec le chlorure de vinyle, sous agitation en suspension aqueuse, par polymérisation radicalaire en présence de colloïdes protecteurs, caractérisé en ce qu'on mène la polymérisation en présence de

a) 0,01 à 1,0% en poids, par rapport à la quantité de monomère en réaction, d'un sel de métal alcalino-terreux, d'aluminium, de zinc ou de plomb d'un acide mono ou polycarboxylique, et

b) 10 à 100 ppm en poids, par rapport à la quantité de monomère en réaction, d'un diol aromatique qui est apte à la formation d'un système quinonique.

2. Procédé selon la revendication 1, caractérisé en ce qu'on utilise en agitateur dont le diamètre s'élève à 30–90% du diamètre du récipient et dont la vitesse des pales est de 1 à 7 m/s.

3. Procédé selon les revendications 1 et 2, caractérisé en ce qu'on utilise le sel métallique d'acide carboxylique à raison de 0,05 à 0,3% en poids, par rapport à la quantité de monomère en réaction.

4. Procédé selon les revendications 1 à 3, caractérisé en ce qu'on utilise le diol aromatique à raison de 50 à 200 ppm en poids, par rapport au monomère en réaction.

5. Procédé selon les revendications 1 à 4, caractérisé en ce qu'on utilise comme sel métallique d'acide carboxylique le laurate, le myristate, l'oléate ou le stéarate de calcium, de magnesium ou de zinc.

6. Procédé selon les revendications 1 à 5, caractérisé en ce qu'on utilise comme diol aromatique l'hydroquinone ou le pyrocatéchol.